# EUROPEAN PATENT SPECIFICATION

(11) **EP 3 466 910 B1**
(45) Date of publication and mention of the grant of the patent: **05.08.2020**
(21) Application number: 17810265.3
(22) Date of filing: 05.06.2017
(51) Int. Cl.: C04B 41/85, B28B 11/08, C04B 35/573, F28F 21/04, C04B 35/636, C04B 35/638, C04B 38/00

(54) **HONEYCOMB STRUCTURE PRODUCTION METHOD**
WABENSTRUKTURHERSTELLUNGSVERFAHREN
PROCÉDÉ DE PRODUCTION D'UNE STRUCTURE EN NID D'ABEILLES

(30) Priority: 06.06.2016 JP 2016112741
(43) Date of publication of application: 10.04.2019
(73) Proprietor: Ibiden Co., Ltd., Ogaki-shi, Gifu 503-8604 (JP)
(72) Inventor: KOGA, Yoshihiro, Ibi-gun Gifu 501-0695 (JP)
(74) Representative: Vigand, Philippe
(86) International application number: PCT/JP2017/020834
(87) International publication number: WO 2017/213089

(56) References cited:
- WO-A1-2012/043758
- JP-A- H11 291 220
- JP-A- S59 177 913
- JP-A- 2001 269 921
- JP-A- 2002 001 720
- JP-A- 2012 211 071

## Description

### TECHNICAL FIELD

The present invention relates to a method for manufacturing a honeycomb structure.

### BACKGROUND ART

Patent document 1 discloses a silicon carbide honeycomb structure, which is impregnated with metal silicon, used as a heat exchanger for, for example, a heat reservoir. In patent document 1, the honeycomb structure is manufactured as described below.

First, a molding material including silicon carbide powder, carbon powder, an organic binder, and water or an organic solvent is kneaded to form a kneaded body for extrusion that is extrusion-molded into a honeycomb shape. Then, after sufficiently drying the obtained molded body, under a metal silicon atmosphere, the obtained molded body is placed in a decompressed inert gas atmosphere or a vacuum to be fired while impregnating the inside of the molded body with the metal silicon.

### PRIOR ART DOCUMENTS

### PATENT DOCUMENTS

Patent Document 1: Japanese Laid-Open Patent Publication No. 8-94268
Patent Document 2: JP 2012211071 A
Patent Document 3: WO 2012043758 A1

Patent documents 2 and 3 disclose further methods for manufacturing Si-SiC honeycomb structures.

### SUMMARY OF THE INVENTION

### PROBLEM TO BE SOLVED BY THE INVENTION

With the manufacturing method disclosed in patent document 1, during firing, there is a need to expose the honeycomb structure to a high temperature environment at around 2000°C, which is a high enough to sinter the silicon carbide powder forming the molded body. Preparation of the high temperature environment is a factor that significantly increases the manufacturing cost from the viewpoint of, for example, facility and energy.

This invention is made in view of such circumstances, and its objective is to provide a method for manufacturing a honeycomb structure that reduces the manufacturing cost.

### MEANS FOR SOLVING THE PROBLEM

A method that achieves the above objective is a method for manufacturing a honeycomb structure that includes a tubular circumferential wall and partition walls forming a honeycomb-shaped cross-section and defining a plurality of cells extending inside the circumferential wall in the axial direction of the circumferential wall. The method includes a molding process, a degreasing process, and an impregnation process. The molding process molds a mixture including ceramic particles, an organic binder, and a dispersion medium to obtain a molded body. The degreasing process removes the organic binder included in the molded body to obtain a degreased body. The impregnation process impregnates the inside of the circumferential wall and the partition walls of the degreased body with metal silicon. The impregnation process is performed under an inert gas atmosphere or a vacuum at a temperature between 1400°C and 1900°C.

With the above structure, there is no need to prepare the high temperature environment at 2000°C or higher to sinter the ceramic particles during the impregnation process. This reduces the manufacturing cost from the viewpoint of, for example, facility and energy. Further, the heating temperature of the impregnation process is set to 1900°C or lower, which reduces thermal expansion of the degreased body thereby limiting damage caused by thermal expansion. Thus, damage caused by thermal shock is limited through this manufacturing method.

Further, the honeycomb structure obtained through the above manufacturing method is a non-sintered honeycomb structure in which the ceramic particles are mostly not sintered and exist independently. The non-sintered honeycomb has a high Young's modulus and resists deformation and is thereby useful as a heat exchanger.

In the above method, it is preferred that the ceramic particles be particles of silicon carbide.

Silicon carbide has a high thermal conductivity and is thereby useful for a heat exchanger. Further, silicon carbide has a coefficient of thermal expansion close to that of metal silicon. This allows for the manufacturing of the honeycomb structure of which damage caused by thermal strain is limited.

In the above method, it is preferred that the impregnation process be performed using metal silicon of an amount corresponding to a volume of 1.00 to 1.05 times a pore volume of the degreased body.

The above structure allows the porosity of the walls of the honeycomb structure to be close to 0%. The setting of the amount of the metal silicon to correspond to a volume of 1.05 times or less the pore volume of the degreased body avoids a situation in which the impregnating metal silicon blocks the cells of the honeycomb structure. Further, the manufacturing cost is reduced.

In the above method, the impregnation process is performed using metal silicon with a purity of less than 98%.

Metal Silicon with a low purity has a low melting point.

Thus, the use of metal silicon with a low purity in the impregnation process allows the impregnation process to be performed at a lower heating temperature. This reduces the manufacturing cost.

In the above method, it is preferred that the impregnation process be performed by heating the degreased body in a state contacting a cluster of metal silicon.

With the above structure, there is no need to prepare an environment like the metal silicon atmosphere of patent document 1. This reduces the manufacturing cost.

In the above method, it is preferred that the molding process obtain the molded body through extrusion-molding, and the impregnation process be performed by heating the degreased body that is arranged so that an extrusion-molding direction during the extrusion-molding coincides with the vertical direction in a state in which the cluster of metal silicon is placed on the degreased body.

In the above structure, the melted metal silicon flows toward the lower part along the walls of the degreased body. This operation allows for efficient impregnation of the inside of the circumferential wall and the partition walls of the degreased body with metal silicon. Further, the degreased body is arranged so that the extrusion-molding direction coincides with the vertical direction. Accordingly, the shape of the degreased body is easily maintained against the load (weight of degreased body or weight of metal silicon cluster) applied to the degreased body during the impregnation process.

In the above method, it is preferred that the method include a fabrication process that removes part of the molded body by bringing the molded body into contact with a fabrication tool heated to a temperature that burns and removes the organic binder, and the degreasing process be performed after the fabrication process.

In the above method, it is preferred that the honeycomb structure include a connection portion that connects some of the cells to each other and include one end that opens in the circumferential wall, and the fabrication process form the connection portion.

In the above structure, the organic binder in the location where the blade is inserted is burned and removed. Accordingly, the insertion resistance of the blade is small so that deformation and damage at the location of insertion and its proximity are limited. Additionally, processing waste is reduced.

### EFFECTS OF THE INVENTION

The method for manufacturing a honeycomb structure of the present invention succeeds in reducing the manufacturing cost.

### BRIEF DESCRIPTION OF THE DRAWINGS

Fig. 1 is a perspective view of a honeycomb structure.
Fig. 2 is a cross-sectional view taken along line 2-2 in Fig. 1.
Fig. 3 is a cross-sectional view taken along line 3-3 in Fig. 1.
Fig. 4 is a schematic view illustrating a molding process.
Fig. 5 is a schematic view illustrating a fabrication process (first fabrication).
Fig. 6 is a schematic view illustrating the fabrication process (second fabrication).
Figs. 7 a schematic view illustrating the fabrication process (third fabrication).
Fig. 8 is a schematic view illustrating a degreasing process.
Fig. 9 is a schematic view illustrating an impregnation process.
Fig. 10 is a schematic view illustrating the fabrication process (second fabrication).
Figs. 11(a) and 11(b) are schematic views illustrating the impregnation process.
Fig. 12 is a photomicrograph of a non-sintered honeycomb structure.
Fig. 13 is a photomicrograph of a sintered honeycomb structure.

### EMBODIMENTS OF THE INVENTION

One embodiment of the present invention will now be described.

An example of a honeycomb structure used as a heat exchanger will be described first.

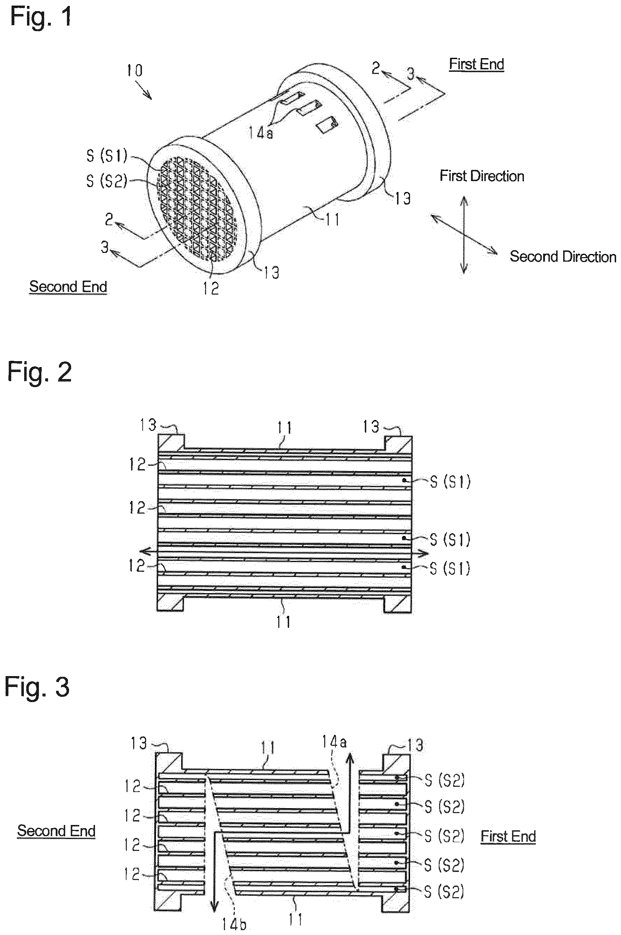

As shown in Fig. 1, a honeycomb structure 10 includes a tubular circumferential wall 11 and partition walls 12 forming a honeycomb-shaped cross-section and defining a plurality of cells extending inside the circumferential wall 11 in the axial direction of the circumferential wall 11. The circumferential wall 11 has two ends. An annular rib 13 projects outward in a radial direction from each end of the circumferential wall 11.

As shown in Figs. 1 to 3, the cells S, which are defined by the partition walls 12, include two types of cells, namely, a first cell S1 that has two open ends and a second cell S2 that has two sealed ends. As shown in Fig. 1, the cells S that are aligned in a first direction (vertical direction of Fig. 1) are all of the same cell type. The cells S that are adjacent to each other in a second direction (front-rear direction relative to plane of Fig. 1) orthogonal to the first direction are of different types.

As shown in Figs. 1 and 3, in the honeycomb structure 10, the second cells S2 portions aligned in the first direction (rows of second cells S2) each include a first connection portion 14a and a second connection portion 14b. The first connection portion 14a and the second connection portion 14b extend in the first direction and connect the adjacent second cells S2 in the first direction.

The first connection portions 14a are arranged close to a first end of the honeycomb structure 10. An end (basal end) of the first connection portion 14a at one side (upper side in Fig. 3) in the first direction opens in the circumferential wall 11. An end (distal end) of the first connection portion 14a at the other side (lower side in Fig. 3) reaches the second cell S2 located farthermost in the first direction.

The second connection portions 14b are arranged close to a second end of the honeycomb structure 10. An end (basal end) of the second connection portion 14b at one side (lower side in Fig. 3) in the first direction opens in the circumferential wall 11. An end (distal end) of the second connection portion 14b at the other side (upper side in Fig. 3) reaches the second cell S2 located farthermost in the first direction.

In this manner, first flow passages and second flow passages are formed in the honeycomb structure 10. Each first flow passage is constructed by one of the first cell S1 and includes an inlet and an outlet formed by the two ends of the cell S1 in the axial direction of the honeycomb structure 10. Each second flow passage is constructed by one of the second cells S2 and includes an inlet and an outlet formed by the openings of the first connection portion 14a and the second connection portion 14b formed in the circumferential wall 11 of the honeycomb structure 10. The honeycomb structure 10 having the above structure exchanges heat between a fluid flowing straight in the first flow passages and a fluid flowing in an S-shaped manner in the second passages through the partition walls 12.

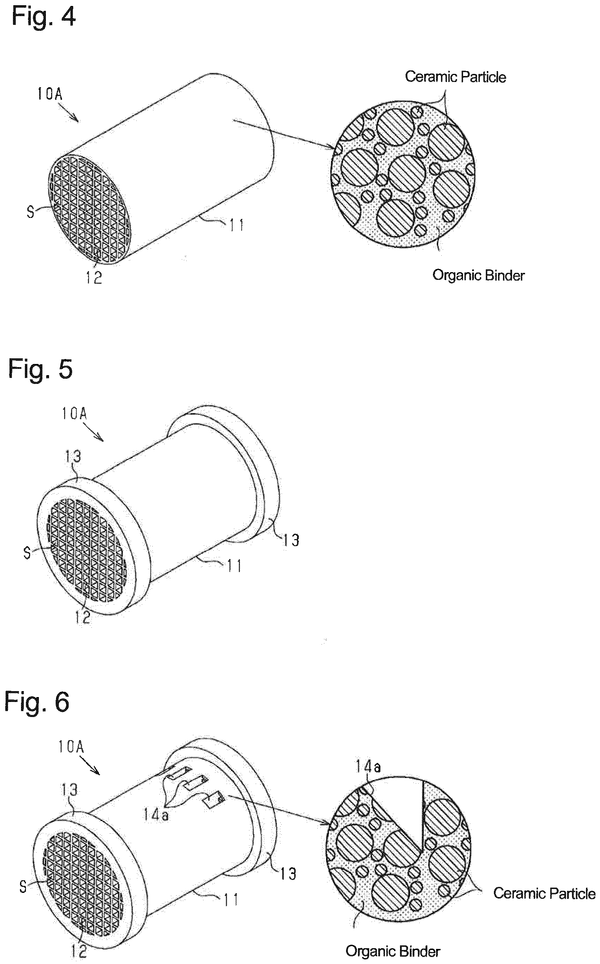

A method for manufacturing the honeycomb structure 10 will now be described with reference to Figs. 4 to 11.

The honeycomb structure 10 is manufactured by sequentially performing a molding process, a fabrication process, a degreasing process, and an impregnation process as described below.

### Molding Process

A clay-like mixture that includes ceramic particles, an organic binder, and a dispersion medium is prepared as the material for molding the honeycomb structure 10.

Examples of the material of the ceramic particles include carbides, such as silicon carbide, tantalum carbide, and tungsten carbide, and nitrides, such as aluminum nitride, silicon nitride, and boron nitride. Among these materials, it is preferable that silicon carbide be used. The mixture may include ceramic particles of one kind or of different kinds. Although not particularly specified, it is preferred that the average diameter of the ceramic particles be, for example, within a range from 10 to 50 µm.

Examples of the organic binder include polyvinyl alcohol, methyl cellulose, ethyl cellulose, and carboxymethyl cellulose. Among these organic binders, it is preferable that methyl cellulose or carboxymethyl cellulose be used. Only one kind of the organic binders may be used or two or more kinds may be used together.

Examples of the dispersion medium include water and an organic solvent. Examples of the organic solvent include ethanol. Only one kind of the organic solvents may be used or two or more kinds may be used together.

The mixture may further include other components. Examples of the other components include a plasticizer and a lubricant. Examples of the plasticizer include a polyoxyalkylene compound, such as polyoxyethylene alkyl ether or polyoxypropylene alkyl ether. Examples of the lubricant include glycerin.

As shown in Fig. 4, in the molding process, a mixture of the above compositions is used to mold a molded body 10A that includes the tubular circumferential wall 11 and the partition walls 12 forming the honeycomb-shaped cross-section and defining the plurality of cells S extending inside the circumferential wall 11 in the axial direction of the circumferential wall 11. In the molded body 10A, the annular ribs 13 have not been molded, and the two ends of each cell S are open.

The molded body 10A, for example, may be extrusion-molded. When molding the molded body 10A through extrusion-molding, the entire molded body 10A may be molded in a single process with a die the shape of which corresponds to the cross-section of the molded body 10A. Alternatively, the molded body 10A may be molded by combining parts molded with dies the shapes of which each correspond to a different part of the cross-section of the molded body 10A.

A drying process is performed to dry the molded body 10A. Specific examples of the drying process include methods using a microwave dryer, a hot-air dryer, a dielectric dryer, a decompression dryer, a vacuum dryer, and a freeze dryer.

### Fabrication Process

The fabrication process is performed to fabricate the molded body 10A so that its outer shape is substantially the same as the outer shape of the honeycomb structure 10. This obtains a fabricated molded body 10B. The fabrication process includes a first fabrication that forms the ribs 13 on the molded body 10A, a second fabrication that forms the first connection portions 14a and the second connection portions 14b in the molded body 10A, and a third fabrication that seals the two ends of some of the cells S in the molded body 10A.

As shown in Fig. 5, in the first fabrication, the clay-like mixture used in the molding process is attached in a predetermined shape on the outer surface of the circumferential wall 11 of the molded body 10A to form the annular ribs 13. Then, a drying process is performed on the molded body 10A to dry the ribs 13.

As shown in Fig. 6, in the second fabrication, the first connection portions 14a and the second connection portions 14b are formed by removing parts of the circumferential wall 11 and the partition walls 12 of the molded body 10A. Although the method for forming the first connection portions 14a and the second connection portions 14b is not particularly specified, it is preferred that a heated fabricating tool be brought into contact with the molded body 10A.

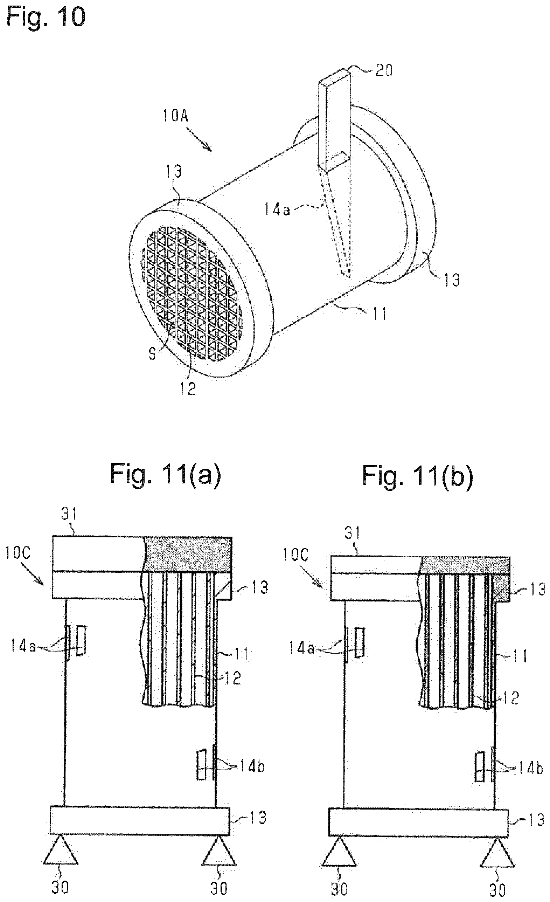

Specifically, as shown in Fig. 10, a blade 20 that has an outer shape corresponding to the shape of the first connection portion 14a and the second connection portion 14b is used as the fabricating tool. The blade 20 is formed from a heat-resistant metal (for example, stainless steel), and has a thickness that is set so as not to exceed the width of the second cell S2. The blade 20 is heated to a temperature that burns and removes the organic binder in the molded body 10A. For example, in a case where the organic binder is methyl cellulose, the blade 20 is heated to higher or equal to 400°C.

Subsequently, the heated blade 20 is inserted into the molded body 10A from the outside and then pulled out to form the first connection portion 14a or the second connection portion 14b. When the heated blade 20 comes into contact with the molded body 10A, the organic binder in the contacting portion of the molded body 10A is burned and removed. Accordingly, the insertion resistance of the blade 20 against the molded body 10A is extremely small so that deformation and damage at the location of insertion and its proximity are limited during the insertion of the blade 20. Further, the organic binder is burned and removed thereby reducing the amount of processing waste produced during the fabrication.

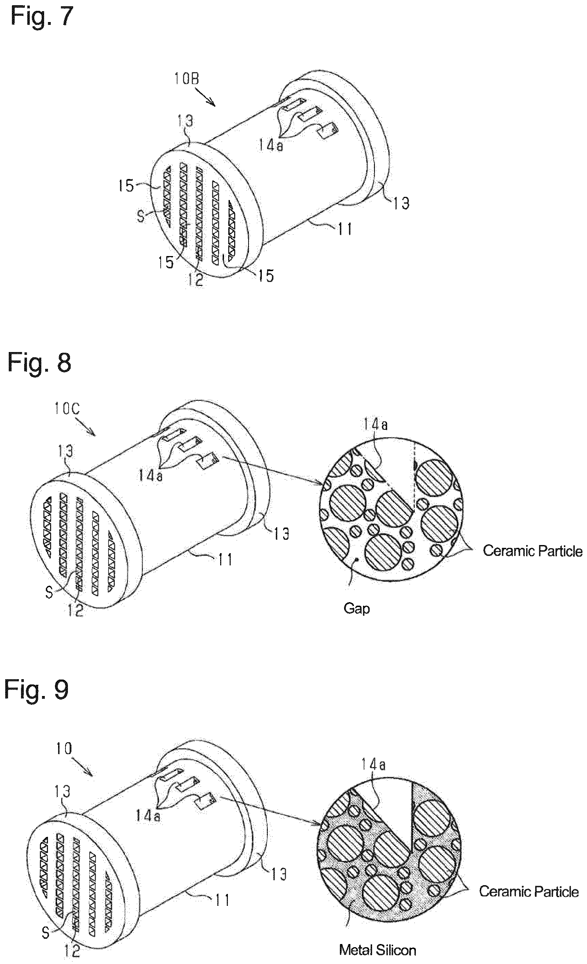

As shown in Fig. 7, in the third fabrication, the two ends of each second cell S2 among the plurality of cells S formed in the molded body 10A is filled with the clay-like mixture used in the molding process to form sealed portions 15. The sealed portions 15 seal the two ends of the corresponding cell S. Then, a drying process is performed on the molded body 10A to dry the sealed portions 15.

The fabricated molded body 10B is obtained by performing the fabrication process including the above first, second, and third fabrications.

### Degreasing Process

The degreasing process is a process that heats the fabricated molded body 10B to burn and remove the organic binder from the fabricated molded body 10B and obtain a degreased body 10C. The heating temperature of the degreasing process is set in accordance with the organic binder used in the mixture and to a temperature that burns and removes the organic binder. For example, in a case where the organic binder is methyl cellulose, the heating temperature is preferably higher or equal to 400°C.

As shown in Fig. 8, the degreased body 10C that includes gaps between the ceramic particles is obtained by performing the degreasing process to remove the organic binder from the fabricated molded body 10B.

### Impregnation Process

The impregnation process is performed to impregnate the circumferential wall 11 and the partition walls 12 of the degreased body 10C with metal silicon. In the impregnation process, in a state contacting the degreased body 10C, a cluster of metal silicon is heated to between 1400°C and 1900°C under an atmosphere of an inert gas, such as argon or nitrogen, or under a vacuum. Consequently, as shown in Fig. 9, capillary action draws the melted metal silicon into the gaps between the ceramic particles, which form the walls of the degreased body 10C, so that the metal silicon is impregnated in the gaps. The metal silicon used has a purity of less than 98%. The melting point of metal silicon has a tendency to decrease as the purity decreases. Accordingly, the use of metal silicon having a low purity lowers the heating temperature required for the impregnation process. As a result, the manufacturing cost is reduced. The metal silicon, for example, has a purity of 95% or greater.

It is preferred that the amount of the metal silicon cluster be set to correspond to a volume of 1.00 to 1.05 times the volumetric capacity of the gaps between the ceramic particles forming the walls of the degreased body 10C (pore volume).

The setting of the amount of the metal silicon cluster to correspond to a volume of 1.00 times or greater the pore volume of the degreased body 10C allows the porosity of the walls of the obtained honeycomb structure 10 to be close to 0%. Further, the setting of the amount of the metal silicon cluster to correspond to a volume of 1.05 times or less the pore volume of the degreased body 10C avoids a situation in which the metal silicon blocks the cells S of the honeycomb structure 10 and reduces the manufacturing cost.

Although the location at which the metal silicon cluster contacts the degreased body 10C is not particularly specified, from the viewpoint of efficiency, it is preferred that the metal silicon cluster contact the upper part of the degreased body 10C.

Specifically, as shown in Fig. 11(a), the degreased body 10C is placed on support stands 30 made of a material having superior heat resistance and superior pressure resistance (for example, graphite). A metal silicon plate 31 is placed on the degreased body 10C. Subsequently, the degreased body 10C and the metal silicon plate 31, arranged in the manner described above, are heated under an inert gas atmosphere of argon or nitrogen or under a vacuum.

In this case, as shown in Fig. 11(b), the melted metal silicon flows toward the lower part along the wall surfaces of the degreased body 10C due to its weight. The melted metal silicon flows into the walls of the degreased body 10C by capillary action while flowing on the wall surfaces. In this way, the walls inside the degreased body 10C can be impregnated with the metal silicon within a shorter period of time compared to when heating the degreased body 10C in a state contacting the metal silicon cluster at the side or the lower part to impregnate the walls inside the degreased body 10C with the metal silicon through only capillary action.

In this case, it is preferred that the degreased body 10C be set so that an extrusion-molding direction during the extrusion-molding coincides with the vertical direction. Accordingly, the shape of the degreased body 10C is easily maintained against the load (weight of degreased body 10C or weight of metal silicon cluster) applied to the degreased body 10C during the impregnation process.

The honeycomb structure 10 is obtained by performing the above impregnation process.

In the present embodiment, special temperature management is performed in the processes after the degreasing process. More specifically, the processes after the degreasing process are performed at a temperature at which the ceramic particles in the mixture used in the molding process are not sintered so that the fabricated molded body 10B and the degreased body 10C are not exposed to a temperature at which most of the ceramic particles are sintered. That is, the fabricated molded body 10B and the degreased body 10C are maintained at a temperature lower than or equal to 1900°C. The temperature required for sintering the ceramic particles made of silicon carbide is approximately 2000°C.

Accordingly, in the degreasing process, heating is performed at a temperature higher than or equal to a temperature that burns and removes the organic binder and lower than or equal to 1900°C. In the same manner, in the impregnation process, heating is performed at a temperature higher than or equal to the melting point of the metal silicon and lower than or equal to 1900°C.

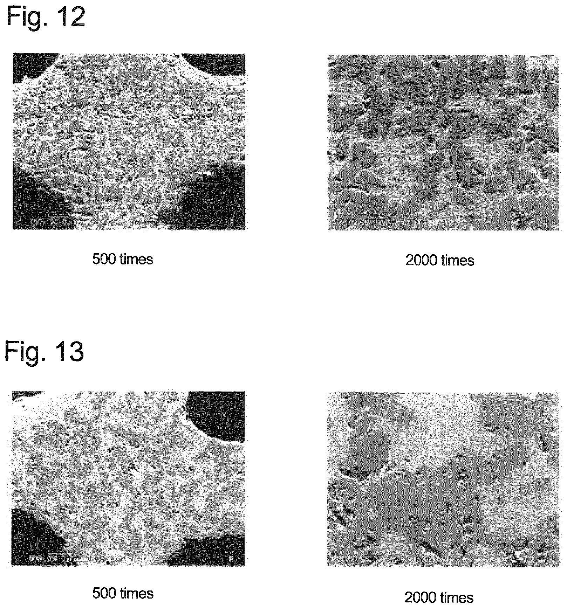

As shown by the photomicrograph shown in Fig. 12, the honeycomb structure obtained under such temperature management is a non-sintered honeycomb structure in which the ceramic particles are not sintered and exist independently. As a comparison, the photomicrograph shown in Fig. 13 shows a honeycomb structure obtained by performing firing after the degreasing process and then impregnation of the fired body (hereafter, referred to as "sintered honeycomb structure"). In the sintered honeycomb structure, the ceramic particles are sintered and form a link called a neck between the particles. In contrast, as shown in Fig. 12, the neck is not formed in the non-sintered honeycomb structure.

The non-sintered honeycomb structure has the same level of strength as the sintered honeycomb structure.

Further, in comparison with the sintered honeycomb structure, the non-sintered honeycomb structure has a higher Young's modulus and resists deformation. When some of the ceramic particles in the sintered honeycomb structure crack, the cracks may spread through the necks to other particles. In contrast, the particles are not linked in the non-sintered honeycomb structure so that even when some of the particles crack, the cracks do not easily spread to other particles. Accordingly, resistance to deformation is imparted to the non-sintered honeycomb structure.

The determination of whether or not the honeycomb structure has been sintered can be performed by, for example, checking whether the shape of the frame portion formed by the ceramic particles is maintained or the shape of the frame portion is not maintained and deformed when melting metal silicon by performing a hydrofluoric acid treatment on the honeycomb structure.

The operation of the present embodiment will now be described.
(1) The method for manufacturing a honeycomb structure includes the molding process, the degreasing process, and the impregnation process. The molding process molds the mixture including the ceramic particles, the organic binder, and the dispersion medium to obtain the molded body. The degreasing process removes the organic binder included in the molded body to obtain the degreased body. The impregnation process impregnates the inside of the circumferential wall and the partition walls of the degreased body with metal silicon. The impregnation process is performed under an inert gas atmosphere or a vacuum at a temperature between 1400°C and 1900°C.
   With the above structure, there is no need to prepare the high temperature environment at 2000°C or higher to sinter the ceramic particles during the impregnation process. This reduces the manufacturing cost from the viewpoint of, for example, facility and energy. Further, the heating temperature of the impregnation process is set to 1900°C or lower, which reduces thermal expansion of the degreased body thereby limiting damage caused by thermal expansion. Thus, damage caused by thermal shock is limited through this manufacturing method.
   Further, the honeycomb structure obtained through the above manufacturing method is a non-sintered honeycomb structure in which the ceramic particles are mostly not sintered and exist independently. The non-sintered honeycomb has a high Young's modulus and resists deformation and is thereby useful as a heat exchanger.
(2) The ceramic particles used are particles of silicon carbide.
   Silicon carbide has a high thermal conductivity and is thereby useful for a heat exchanger. Further, silicon carbide has a coefficient of thermal expansion close to that of metal silicon. This allows for the manufacturing of the honeycomb structure of which damage caused by thermal strain is limited.
(3) The fabrication process is performed to remove parts of the molded body by bringing the molded body into contact with the blade heated to a temperature that burns and removes the organic binder.
   In the above structure, the organic binder in the location where the blade is inserted is burned and removed. Accordingly, the insertion resistance of the blade is small so that deformation and damage at the location of insertion and its proximity are limited. Additionally, processing waste is reduced.
(4) The impregnation process is performed using metal silicon of an amount corresponding to a volume of 1.00 to 1.05 times the pore volume of the degreased body.
   The above structure allows the porosity of the walls of the honeycomb structure to be close to 0%. Further, this avoids a situation in which the impregnating metal silicon blocks the cells of the honeycomb structure. Additionally, the manufacturing cost is reduced.
(5) The impregnation process is performed using metal silicon with a purity of less than 98%.
   Metal silicon with a low purity has a low melting point. Thus, the use of metal silicon with a low purity in the impregnation process allows the impregnation process to be performed at a lower heating temperature. This reduces the manufacturing cost.
(6) The impregnation process is performed by heating the degreased body to a temperature higher than or equal to the melding point of metal silicon, in a state contacting the cluster of metal silicon, to impregnate the degreased body with metal silicon.
   With the above structure, there is no need to prepare an environment like the metal silicon atmosphere of patent document 1. This reduces the manufacturing cost.
(7) In the impregnation process, heating is performed in a state in which the cluster of metal silicon is placed on the degreased body.
   In the above structure, the melted metal silicon flows toward the lower part along the walls of the degreased body. This operation allows for efficient impregnation of the inside of the circumferential wall and the partition walls of the degreased body with metal silicon.
(8) In the impregnation process, the degreased body is arranged so that the extrusion-molding direction during the extrusion-molding coincides with the vertical direction.

With the above structure, the shape of the degreased body is easily maintained against the load (weight of degreased body or weight of metal silicon cluster) applied to the degreased body during the impregnation process.

The present embodiment may be modified as described below.

- The shape of the honeycomb structure (for example, outer shape of honeycomb structure or shape of cell) is not limited to that of the above embodiment and may be modified.
- The first cell S1 and the second cell S2 do not necessarily have to be adjacent in the second direction of Fig. 1, and may also be, for example, arranged in the order of the second cell S2, the first cell S1, and the first cell S1 (repeated thereafter).
- The fabrication process may be omitted partially or entirely. The fabrication process is performed to fabricate the molded body obtained through the molding process so that its shape is close the shape of a manufactured honeycomb structure. Accordingly, the fabrication process may include only necessary fabrications in correspondence with the shape of the manufactured honeycomb structure or the shape of the molded body. For example, when the manufactured honeycomb structure does not include the ribs, the first fabrication in which the ribs are formed is not necessary.

Further, the fabrication process may include a fabrication other than the first fabrication, the second fabrication, and the third fabrication. However, the fabrication that includes the removal of parts of the molded body is preferably performed by bringing the molded body into contact with a fabrication tool that is heated to a temperature at which the organic binder is burned and removed.
- The method for manufacturing a honeycomb structure may further include a process other than the molding process, the fabrication process, the degreasing process, and the impregnation process. For example, a surface fabrication such as polishing may be performed after the impregnation process. However, processes after the degreasing process need to be performed at a temperature lower than or equal to 1900°C in the same manner as in the impregnation process.

### EXAMPLE

A specific example of the above embodiment will now be described.

### Example

A mixture of the compositions described below was prepared.

Silicon carbide particles with average diameter of 15 µm (large particles): 52.5 parts by mass
Silicon carbide particles with average diameter of 0.5 µm (small particles): 23.6 parts by mass
Methylcellulose (organic binder): 5.4 parts by mass Glycerin (lubricant): 1.1 parts by mass
Polyoxyalkylene compound (plasticizer): 3.2 parts by mass Water (dispersion medium): 11.5 parts by mass

The mixture was used to mold a cylindrical molded body having a honeycomb structure that is 35 mm in diameter, 100 mm in length, 0.3 mm in thickness at the circumferential wall, 0.1 mm in thickness at the partition walls, and 0.94 mm in width at the cells. Then, a degreased body was obtained by heating the molded body at 450°C for five hours to remove the organic binder. Subsequently, a 20 g (amount corresponding to a volume of one time the pore volume of degreased body) metal silicon plate having a purity of 97.5% was set on the degreased body and heated at 1550°C for seven hours under a vacuum to perform impregnation with the metal silicon and obtain the honeycomb structure of the example. Fig. 12 is the photomicrograph of the honeycomb structure of the example.

### Comparative Example

A molded body and a degreased body were obtained in the same manner as the example. A fired body was obtained by heating the degreased body at 2200°C for three hours under an argon atmosphere. Subsequently, a 20 g metal silicon plate was set on the fired body and heated at 1550°C for seven hours under a vacuum to perform impregnation with the metal silicon and obtain the honeycomb structure of the comparative example. Fig. 13 is the photomicrograph of the honeycomb structure of the comparative example.

### Evaluation Tests

The flexural strength and Young's modulus of the honeycomb structures of the example and the comparative example were measured. The results are shown in Table 1.

The flexural strength of the honeycomb structure was measured by the three-point flexural test as described below. Ten samples were cut out from the honeycomb structures of the example and the comparative example with each sample having a size of 2 cells × 4 cells × 40 mm excluding the circumferential wall and the sealed portions. Then, a load was applied in a direction perpendicular to the main surface of each measurement sample (larger surface) to measure the breaking load (load that breaks the sample). The breaking loads of the ten samples were measured. The average value was obtained as the flexural strength. The three-point flexural tests were performed with reference to JIS R 1601 using Instron 5582 with a 30 mm span length at a speed of 1 mm/min.

The Young's modulus of the honeycomb structure was measured through the method described below. A measurement sample having a size of 10 mm width × 50 mm length × 0.4 mm thickness excluding the circumferential wall and the sealed portions was cut out from the honeycomb structures of the example and the comparative example. Subsequently, the samples for measurements were set on a Young's modulus measuring apparatus to measure the Young's modulus using the resonance method. A JE-RT model elastic modulus measuring apparatus (manufactured by Nihon Techno-Plus Co. Ltd.) was used as the measuring apparatus. The measuring was performed in an atmospheric environment at a room temperature.

**Table 1**

| | Example | Comparative Example |
|---|---|---|
| Flexural Strength (MPa) | 64.3 | 64.7 |
| Young's Modulus (MPa) | 540 | 494 |
| Flexural Strength/ Young's Modulus | 0.119 | 0.130 |

The results in Table 1 show that the honeycomb structure of the example has the same level of flexural strength as the honeycomb structure of the comparative example. Further, the honeycomb structure of the example has a higher Young's modulus than the honeycomb structure of the comparative example and resists deformation.

### DESCRIPTION OF REFERENCE CHARACTERS

S) cell; S1) first cell; S2) second cell; 10) honeycomb structure; 10A) molded body; 10B) fabricated molded body; 10C) degreased body; 11) circumferential wall; 12) partition walls; 13) rib; 14a) first connection portion; 14b) second connection portion; 15) sealed portion; 20) blade (fabrication tool); 30) support stand; 31) metal silicon plate.

## Claims

1. A method for manufacturing a honeycomb structure (10) that includes a tubular circumferential wall (11) and partition walls (12) forming a honeycomb-shaped cross-section and defining a plurality of cells (S) extending inside the circumferential wall in the axial direction of the circumferential wall, the method comprising:
a molding process that molds a mixture including ceramic particles, an organic binder, and a dispersion medium to obtain a molded body;
a degreasing process that removes the organic binder included in the molded body to obtain a degreased body; and
an impregnation process that impregnates the inside of the circumferential wall and the partition walls of the degreased body with metal silicon, wherein
the impregnation process is performed using metal silicon with a purity of less than 98 % under an inert gas atmosphere or a vacuum at a temperature between 1400°C and 1900°C.

2. The method according to claim 1, wherein the ceramic particles are particles of silicon carbide.

3. The method according to claim 1 or 2, wherein the impregnation process is performed using metal silicon of an amount corresponding to a volume of 1.00 to 1.05 times a pore volume of the degreased body.

4. The method according to any one of claims 1 to 3, wherein the impregnation process is performed by heating the degreased body in a state contacting a cluster of metal silicon.

5. The method according to claim 4, wherein
the molding process obtains the molded body through extrusion-molding, and
the impregnation process is performed by heating the degreased body that is arranged so that an extrusion-molding direction during the extrusion-molding coincides with the vertical direction in a state in which the cluster of metal silicon is placed on the degreased body.

6. The method according to any one of claims 1 to 5, wherein
the method includes a fabrication process that removes part of the molded body by bringing the molded body into contact with a fabrication tool heated to a temperature that burns and removes the organic binder, and
the degreasing process is performed after the fabrication process.

7. The method according to claim 6, wherein
the honeycomb structure includes a connection portion that connects some of the cells to each other and includes one end that opens in the circumferential wall, and
the fabrication process forms the connection portion.

## Patentansprüche

1. Verfahren zum Herstellen einer Wabenstruktur (10), die eine rohrförmige Umfangswand (11) und Trennwände (12), die einen wabenförmigen Querschnitt bilden und eine Vielzahl von Zellen (S) definieren, die sich in der Umfangswand in die Axialrichtung der Umfangswand erstrecken, beinhaltet, wobei das Verfahren Folgendes umfasst:
einen Formungsprozess, der eine Mischung formt, die Keramikteilchen, ein organisches Bindemittel und ein Dispersionsmittel beinhaltet, um einen geformten Körper zu erhalten;
einen Entfettungsprozess, der das organische Bindemittel, das im geformten Körper beinhaltet ist, entfernt, um einen entfetteten Körper zu erhalten; und
einen Imprägnierungsprozess, der die Innenseite der Umfangswand und der Trennwände des entfetteten Körpers mit Siliciummetall imprägniert, wobei
der Imprägnierungsprozess unter Verwendung von Siliciummetall mit einer Reinheit von weniger als 98% unter einer Edelgasatmosphäre oder einem Vakuum bei einer Temperatur zwischen 1400°C und 1900°C durchgeführt wird.

2. Verfahren nach Anspruch 1, wobei die Keramikteilchen Teilchen von Siliciumcarbid sind.

3. Verfahren nach Anspruch 1 oder 2, wobei der Imprägnierungsprozess unter Verwendung von Siliciummetall einer Menge, die einem Volumen von 1,00 bis 1,05 Mal einem Porenvolumen des entfetteten Körpers entspricht, durchgeführt wird.

4. Verfahren nach einem der Ansprüche 1 bis 3, wobei der Imprägnierungsprozess durch Erwärmen des entfetteten Körpers in einem Zustand, in dem eine Masse Siliciummetall berührt wird, durchgeführt wird.

5. Verfahren nach Anspruch 4, wobei
beim Formungsprozess der geformte Körper mittels Extrusionsformen erhalten wird, und
der Imprägnierungsprozess durch Erwärmen des entfetteten Körpers, der derart angeordnet ist, dass eine Extrusionsformungsrichtung während des Extrusionsformens mit der vertikalen Richtung zusammenfällt, in einem Zustand, in dem die Masse Siliciummetall auf dem entfetteten Körper platziert ist, durchgeführt wird.

6. Verfahren nach einem der Ansprüche 1 bis 5, wobei
das Verfahren einen Fertigungsprozess beinhaltet, bei dem ein Teil des geformten Körpers entfernt wird, indem der geformte Körper mit einem Fertigungswerkzeug in Kontakt gebracht wird, das auf eine Temperatur erhitzt ist, die das organische Bindemittel verbrennt und entfernt, und
der Entfettungsprozess nach dem Fertigungsprozess durchgeführt wird.

7. Verfahren nach Anspruch 6, wobei
die Wabenstruktur einen Verbindungsabschnitt beinhaltet, der einige der Zellen miteinander verbindet und ein Ende beinhaltet, das sich in der Umfangswand öffnet, und
der Verbindungsabschnitt im Fertigungsprozess gebildet wird.

## Revendications

1. Procédé de production d'une structure en nid d'abeilles (10) qui inclut une paroi circonférentielle tubulaire (11) et des parois de séparation (12) formant une section transversale en forme de nid d'abeilles et définissant une pluralité de cellules (S) s'étendant à l'intérieur de la paroi circonférentielle dans la direction axiale de la paroi circonférentielle, le procédé comprenant :
un processus de moulage qui moule un mélange incluant des particules de céramique, un liant organique et un milieu de dispersion pour obtenir un corps moulé ;
un processus de dégraissage qui élimine le liant organique inclut dans le corps moulé pour obtenir un corps dégraissé ; et
un processus d'imprégnation qui imprègne l'intérieur de la paroi circonférentielle et les parois de séparation du corps dégraissé avec du silicium métallique, dans lequel
le processus d'imprégnation est réalisé à l'aide de silicium métallique ayant une pureté de moins de 98 % sous une atmosphère de gaz inerte ou sous un vide à une température entre 1400 °C et 1900 °C.

2. Procédé selon la revendication 1, dans lequel les particules de céramique sont des particules de carbure de silicium.

3. Procédé selon la revendication 1 ou 2, dans lequel le processus d'imprégnation est réalisé à l'aide de silicium métallique d'une quantité correspondant à un volume de 1,00 à 1,05 fois un volume de pores du corps dégraissé.

4. Procédé selon l'une quelconque des revendications 1 à 3, dans lequel le processus d'imprégnation est réalisé par le chauffage du corps dégraissé dans un état en contact avec un amas de silicium métallique.

5. Procédé selon la revendication 4, dans lequel
le processus de moulage obtient le corps moulé par extrusion-moulage, et
le processus d'imprégnation est réalisé par le chauffage du corps dégraissé qui est agencé de sorte qu'une direction d'extrusion-moulage au cours de l'extrusion-moulage coïncide avec la direction verticale dans un état dans lequel l'amas de silicium métallique est placé sur le corps dégraissé.

6. Procédé selon l'une quelconque des revendications 1 à 5, dans lequel
le procédé inclut un processus de fabrication qui élimine une partie du corps moulé par le fait d'amener le corps moulé en contact avec un outil de fabrication chauffé jusqu'à une température qui brûle et élimine le liant organique, et
le processus de dégraissage est réalisé après le processus de fabrication.

7. Procédé selon la revendication 6, dans lequel
la structure en nid d'abeilles inclut une partie de liaison qui relie certaines des cellules les unes aux autres et inclut une extrémité qui s'ouvre dans la paroi circonférentielle, et
le processus de fabrication forme la partie de liaison.
